# EUROPÄISCHE PATENTSCHRIFT

(11) **EP 3 116 637 B1**
(45) Veröffentlichungstag und Bekanntmachung des Hinweises auf die Patenterteilung: **04.04.2018**
(21) Anmeldenummer: 15705531.0
(22) Anmeldetag: 05.02.2015
(51) Int. Cl.: C01B 21/087, C07F 7/10, C08G 77/62

(54) **VERFAHREN ZUR HERSTELLUNG VON REINEM TRISILYLAMIN**
METHOD FOR PRODUCING PURE TRISILYLAMINE
PROCÉDÉ DE FABRICATION DE TRISYLAMINE PURE

(30) Priorität: 14.03.2014 DE 102014204785
(43) Veröffentlichungstag der Anmeldung: 18.01.2017
(73) Patentinhaber: Evonik Degussa GmbH, 45128 Essen (DE)
(72) Erfinder: HOPPE, Carl-Friedrich, 63584 Gründau (DE); GÖTZ, Christian, 11148 Tapei (TW); UEHLENBRUCK, Goswin, 61440 Oberursel (DE)
(86) Internationale Anmeldenummer: PCT/EP2015/052397
(87) Internationale Veröffentlichungsnummer: WO 2015/135698

(56) Entgegenhaltungen:
- WO-A1-2013/004423
- WO-A1-2013/087298
- WO-A1-2013/119902
- WO-A1-2014/023470
- WO-A1-2014/191058

## Beschreibung

Die Erfindung betrifft ein Verfahren zur Herstellung von Trisilylamin in der Flüssigphase, indem man Monochlorsilan in einem Lösungsmittel bei erhöhter Temperatur flüssig vorlegt, und das Monochlorsilan bei dieser Temperatur mit NH₃ in stöchiometrischem Überschuss umsetzt.

Im Rahmen der Erfindung werden Trisilylamin mit TSA, Disilylamin mit DSA, Monochlorsilan mit MCS abgekürzt.

Es ist bekannt, TSA für die Erzeugung von Siliziumnitrid-Schichten einzusetzen, beschrieben z. B. in den Schriften US4200666, und JP 1986-96741. TSA findet insbesondere Verwendung bei der Chip-Herstellung als Schicht-Präkursor für Siliziumnitrid- oder Siliciumoxynitrid-Schichten, z. B. in US 2011/0136347. Ein spezielles Verfahren zur Anwendung von TSA offenbart die unter WO 2004/030071 veröffentlichte Anmeldung, bei der klar wird, dass bei der Anwendung in der Chip-Herstellung die sichere, störungsfreie und in hochreiner Qualität konstante Produktion von TSA besonders wichtig ist.

Die Herstellung von TSA verläuft gemäß folgender Reaktionsgleichung:

(1) 3 SiH₃Cl + 4 NH₃ → 3 NH₄Cl + (SiH₃)₃N

Die Reaktion ist erstmalig 1921 von Stock und Somieski [1] beschrieben worden. Die Umsetzung wurde seinerzeit in der Gasphase durchgeführt.

In der Literatur werden zwei Reaktionsmechanismen für die TSA-Synthese aus Ammoniak und MCS beschrieben.

In [2] wird ein Reaktionsmechanismus gemäß der nachfolgenden dreistufigen Reaktion beschrieben.

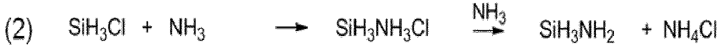

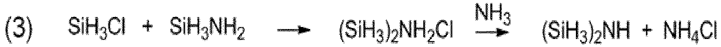

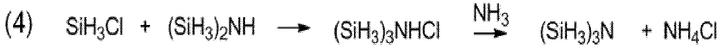

Hierbei reagieren MCS und Ammoniak in der ersten Gleichung zu einem Addukt, das mit einem weiteren Molekül Ammoniak zu Monosilylamin und Ammoniumchlorid abreagiert.
In der zweiten Gleichung reagiert das Monosilylamin mit einem weiteren Molekül MCS zu einem Addukt, dass mit einem weiteren Molekül Ammoniak zu Disilylamin und Ammoniumchlorid abreagiert.
In der dritten Gleichung reagiert Disilylamin mit einem weiteren Molekül MCS zu einem Addukt, das mit einem weiteren Molekül Ammoniak schließlich zu Trisilylamin und Ammoniumchlorid abreagiert.

Gemäß [2, 3] sind bzgl. des Reaktionsmechanismus zusätzlich die Kondensationsreaktionen (6) und (7) heranzuziehen.

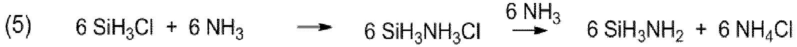

(6) 6 SiH₃NH₂ → 3 (SiH₃)₂NH + 3 NH₃

(7) 3 (SiH₃)₂NH → 2 (SiH₃)₃N + NH₃

Hierbei reagieren MCS und Ammoniak in der ersten Gleichung zu einem Addukt, das mit einem weiteren Molekül Ammoniak zu Monosilylamin und Ammoniumchlorid abreagiert.
In der zweiten Gleichung kondensiert bzw. disproportioniert Monosilylamin unter Bildung von Disilylamin und Ammoniak.
In der dritten Gleichung kondensiert bzw. disproportioniert Disilylamin unter Bildung von Trisilylamin und Ammoniak.

Sowohl beim Reaktionsmechanismus nach den Gleichungen (2), (3), (4), als auch nach den Gleichungen (5), (6), (7) handelt es um einen dreistufigen Mechanismus mit Monosilylamin [12] und Disilylamin (siehe [6], [7], [8], [12] und die vorliegende Beschreibung) als Intermediaten.

Miller [6] beschreibt einen Apparat sowie eine Methode zur Herstellung von TSA. Hierbei strömen MCS und Ammoniak gasförmig durch einen Reaktor. Das aus dem Reaktor austretende Gasgemisch wird in einer nachgeschalteten Kühlfalle bei -78 °C auskondensiert. Das aus dem Reaktor austretende Gasgemisch bzw. die auskondensierte Flüssigkeit enthalten Monosilan, MCS, DSA und TSA. Nach Aufheizen der Kühlfalle auf 20 °C enthält die Flüssigkeit Monosilan, MCS und TSA.

Ritter [7] beschreibt die TSA-Synthese in einem Flüssigphasenprozess mit Anisol als Lösungsmittel. MCS wird in Anisol vorgelegt und Ammoniak in die Lösung zudosiert

Aylett und Hakim [4] offenbaren einen Prozess, bei dessen Durchführung DSA nach Aufheizung der Gasphase auf 150 °C für 3 Stunden unverändert geblieben ist. Weiterhin berichten sie, dass sich DSA in der flüssigen Phase nach 72 Stunden bei 0 °C zu 80 % in TSA nach folgender Reaktionsgleichung umgewandelt hat.

(8) 3 (SiH₃)₂NH → 2 (SiH₃)₃N + NH₃

Weiterhin wird berichtet, dass DSA und überschüssiger Ammoniak in der Gasphase bei Raumtemperatur nicht reagieren, und bei -130 °C wird innerhalb 1 Minute das gesamte DSA unter Bildung von Silan und geringen Mengen an Ammoniak zersetzt.

Wells und Schaeffer [5] beschreiben die Kondensation von MCS und Ammoniak in einer Reaktionsküvette und die Aufheizung von -196 °C bis zur Raumtemperatur. Hierbei werden neben TSA Monosilan, Ammoniak, Polysilazane und Ammoniumchlorid gebildet.

Korolev [8] beschreibt die TSA-Synthese in der Flüssigphase mit Toluol als Lösungsmittel. MCS wird in Toluol vorgelegt und Ammoniak in die Lösung zudosiert. Die Mischung wird für eine Zeitdauer von etwa 1 bis 48 Stunden bei einer Temperatur von etwa minus 100 °C bis 0 °C gerührt. Es wird unklar gelassen, ob sich diese Zeitangabe nur auf die Dauer bezieht, während der Ammoniak zudosiert wird, oder ob damit, möglicherweise nicht ausschließlich, der Zeitraum gemeint ist, währenddessen nach abgeschlossener Dosierung gerührt wird. Den Ausführungsbeispielen entnimmt man, dass nach der Umsetzung das Gemisch bei Raumtemperatur 24 Stunden lang gerührt wird. Hieraus lässt sich folgern, dass die notwendige Zeitdauer für die Durchführung des Verfahrens bei mehr als 24 Stunden liegt.

In [6] und [7] wird ausgesagt, dass Ammoniumhalogenide, wie Ammoniumchlorid, Katalysatoren sind, in deren Gegenwart TSA in Silan und andere Abbauprodukte disproportioniert. Dadurch sinkt die Ausbeute an TSA.

In sämtlichen Ausführungsbeispielen von [7] mit Ausnahme der Beispiele 9 und 10 wird mit deutlichen MCS-Überschüssen gearbeitet. Durch die Fahrweise mit MCS-Überschuss kommt es dazu, dass MCS in die destillative Aufarbeitung gerät und es dort zu Ablagerungen von Ammoniumchlorid kommt - infolge der Reaktion von DSA mit MCS unter Bildung von Ammoniumchlorid.

Beispiel 9 gibt einen MCS-Unterschuss von 26 Mol-% an. Falls die in Beispiel 9 aufgeführte TSA-Ausbeute von 85 % wie in den Beispielen 1-7 der Tabelle 1 auf Ammoniak bezogen ist, würde eine rechnerisch unmögliche TSA-Ausbeute bezogen auf MCS von 115 % resultieren.

Im Beispiel 10 wird die Zugabe der doppelten stöchiometrischen Menge an Ammoniak offenbart. Die Ergebnisse zeigen, dass sich kein TSA gebildet hat. Nur Monosilan und Ammoniak wurden detektiert.

Die auf MCS bezogenen TSA-Ausbeuten, die in [7] in den Ausführungsbeispielen 1 - 8 und 11 - 13 offenbart sind, liegen bis auf die TSA-Ausbeute im 11. Beispiel (68 %) zwischen 14 % und 58 %. Grund dafür ist u.a. der hohe MCS-Überschuss gegenüber Ammoniak.

Der im Beispiel 1 von [8] offenbarte stöchiometrische MCS-Überschuss führt dazu, dass MCS in die destillative Aufarbeitung gerät und es dort infolge der Reaktion von DSA mit MCS zu Ablagerungen von Ammoniumchlorid kommt.
Die auf MCS bezogenen TSA-Ausbeuten in den Ausführungsbeispielen von [8] betragen 57 %, gefahren mit stöchiometrischem NH₃-Unterschuss (Beispiel 1), 63 % bei stöchiometrischem Verhältnis NH₃:MCS (Beispiel 2), bzw. 34 % mit stöchiometrischem NH₃-Überschuss im Beispiel 3. Es wird ausgesagt, dass ein stöchiometrischer Überschuss an Ammoniak zu einer niedrigen Ausbeute an TSA und der Bildung von "unerwünschten" Nebenprodukten führt. Deshalb beträgt das stöchiometrische molare Verhältnis von MCS zur Ammoniak vorzugsweise 1 : 1 bis 1,5 : 1. Weiterhin wird ausgesagt, dass überschüssiges MCS gute Ausbeuten und Reinheiten an TSA produziert. Deshalb beträgt das stöchiometrische molare Verhältnis von MCS zu Ammoniak besonders bevorzugt 1,1 : 1 bis 1,5 : 1 (Abschnitt [0045] in [8]).

Dem Beispiel 3 in [8] bei Fahrweise mit überschüssigem NH₃ lässt sich entnehmen, dass neben TSA DSA entsteht. Weiterhin werden Produkte, die durch Kondensationsreaktion zwischen Ammoniak und TSA entstehen, zusätzlich beobachtet.

In [8] wird ausgeführt, dass das durch Destillation gereinigte TSA eine Reinheit von ca. 97 % mol/mol bis ca. 100 % mol/mol hat. Das TSA hat gemäß den Ausführungsbeispielen Reinheiten von 91 % mol/mol (Beispiel 1), 92 % mol/mol (Beispiel 2), bzw. 40 % mol/mol (Beispiel 3).

In [7] finden sich keine Angaben über die erzielte Reinheit des TSAs.

In [9, 10, 11] wird die TSA-Synthese in der Flüssigphase mit inertem Lösungsmittel, bevorzugt mit Toluol beschrieben.

In der Patentanmeldung [10] wird ein Verfahren zur gekoppelten Herstellung von Polysilazanen und Trisilylamin offenbart, bei dem die Herstellung von TSA und Polysilazanen durch Umsetzung von Monochlorsilan durch Zugabe von zunächst einem stöchiometrischen Unterschuss an Ammoniak erfolgt. Anschließend wird TSA aus dem Produktgemisch gasförmig abgetrennt. Erst im Anschluss daran erfolgt die Zugabe von weiterem Ammoniak, so dass in diesem Schritt erst ein stöchiometrischer Überschuss des insgesamt zudosierten Ammoniaks gegenüber der ursprünglich vorgelegten Menge an Monochlorsilan resultiert. Monochlorsilan ist durch die Zugabe des zunächst stöchiometrischen Unterschusses an Ammoniak in den Reaktor nicht vollständig umgesetzt. Entsprechend gelangen bei der sich anschließenden gasförmigen Abtrennung von TSA Monochlorsilan sowie in geringen Mengen gebildetes Disilylamin mit in die TSA-Produktlösung. Disilylamin und Monochlorsilan reagieren miteinander. Diese Reaktion läuft langsam ab und ist mit der Ausfällung von weiterem Ammoniumchlorid verbunden. Hierdurch kommt es in der aus dem Reaktor abgezogenen TSA-Produktlösung bzw. in den Anlagenteilen, die dem Reaktor nachgeschaltet sind, zur Ausfällung von Ammoniumchlorid. Durch die langsam ablaufende Reaktion tritt die Ausfällung von Ammoniumchlorid entsprechend nach der Filtration im TSA-Produktlösungsfiltrat erneut auf. Insbesondere führt diese Reaktion zu Ammoniumchlorid-Ablagerungen in Rektifikationskolonnen, die zur Aufreinigung des TSAs dienen.

In der Patentanmeldung [11] wird ein Verfahren zur gekoppelten Herstellung von Polysilazanen und Trisilylamin aus Monochlorsilan und Ammoniak offenbart, bei dem die in [10] genannten Nachteile und Limitierungen vollständig umgangen werden, insbesondere die nachträgliche Bildung von Ammoniumchlorid durch Reaktion von Monochlorsilan mit Disilylamin in Anlagenteilen zur Aufreinigung des TSA-Produktstroms außerhalb des Reaktors verhindert wird.

Weitere Verfahren zur Herstellung von TSA sind aus WO2013/004423 und WO2013/119902 bekannt. Hierzu wird Ammoniak direkt und in einem Schritt überstöchiometrisch gegenüber Monochlorsilan, das in inertem Lösungsmittel vorliegt, dosiert. Durch die stöchiometrische Überdosierung von NH₃ gegenüber Monochlorsilan wird Monochlorsilan im Reaktor vollständig umgesetzt. Durch die stöchiometrische Überdosierung von NH₃ gegenüber Monochlorsilan wird somit in nachgelagerten Anlagenteilen die Reaktion von Monochlorsilan mit zusätzlichem, in geringen Mengen gebildetem Disilylamin unter Bildung von festem Ammoniumchlorid verhindert.
Anschließend wird das TSA enthaltene Produktgemisch gasförmig abgetrennt. Das erhaltene Produktgemisch wird filtriert und ist anschließend vollständig frei von Ammoniumchlorid. Durch Rektifikation wird TSA aufgereinigt und in hoher oder höchster Reinheit erhalten. Die eingesetzten Rektifikationskolonnen enthalten nach der Rektifikation kein festes Ammoniumchlorid.
Es besteht fortwährend großes Interesse an einem kommerziellen Prozess, der TSA in größeren Reinheiten bereitstellt.
Aufgabe der vorliegenden Erfindung ist die Bereitstellung eines Verfahrens, das TSA möglichst vollständig und ohne die Bildung signifikanter Mengen an DSA synthetisiert. Zu der Aufgabe gehört es, die im Stand der Technik beobachtete katalytische Zersetzung von TSA durch Ammoniumchlorid in Silan und andere Abbauprodukte weitestgehend zu vermeiden.
Durch die vorliegende Erfindung wird ein Verfahren bereitgestellt, bei dessen Durchführung die dreistufige Reaktion nach den Reaktionsgleichungen (2), (3), (4) bzw. (5), (6), (7) vollständig abläuft, ohne dass signifikante Mengen an DSA im Produkt verbleiben. Dies ist gleichbedeutend damit, dass nach Zugabe von Ammoniak in den Reaktor die einzelnen Reaktionsstufen schnell unter Bildung von TSA durchlaufen werden und die unvollständige Silylierung von Ammoniak, somit der Ablauf der Reaktion lediglich bis zur Bildung von DSA bis auf geringe Restmengen an DSA vermieden wird.

Die Erfinder sind der Ansicht, dass die Konzentration an den Edukten Monochlorsilan und Ammoniak, die Temperatur sowie eine intensive Durchmischung des Reaktors einen entscheidenden Einfluss auf den raschen und vollständigen Ablauf der dreistufigen TSA-Reaktion haben.

Gegenstand der Erfindung ist ein Verfahren zur Herstellung von Trisilylamin in der Flüssigphase, indem man
(a) zumindest Monochlorsilan (MCS) in einem Lösungsmittel (L) gelöst in einem Reaktor (1) flüssig vorlegt, wobei
   das Lösungsmittel gegenüber MCS, Ammoniak (NH₃), und TSA inert ist und einen höheren Siedepunkt als TSA aufweist, die Lösung rührt, und man die Temperatur T der Lösung auf 10 °C oder höher einstellt, und
(b) die Reaktion in Reaktor (1) durchführt, indem man
   NH₃ in den Reaktor (1) in stöchiometrischem Überschuss gegenüber MCS einleitet, wobei die Temperatur T gehalten wird, und anschließend
(c) den Reaktor entspannt, einen Druck von 0,5 bar a bis 0,8 bar a einstellt, den Reaktor beheizt, das Produktgemisch (TSA, L, NH₄Cl, DSA, NH₃) aus Reaktor (1) gasförmig über Kopf durch eine Destilliereinheit (2) leitet, das NH₃ mittels einer Vakuumeinheit (8) abtrennt, das Produktgemisch (TSA, L, NH₄Cl, DSA) in einem Wärmetauscher (7) kondensiert und das Produktgemisch (TSA, L, NH₄Cl, DSA) in einem Behälter (6) auffängt, anschließend
(d) mittels Filtereinheit (3) filtriert, wobei festes Ammoniumchlorid (NH₄Cl) aus dem Produktgemisch abgetrennt wird, und man das Filtrat aus der Filtereinheit (3) in die Rektifikationskolonne (4) führt,
   in der man DSA über Kopf vom Gemisch (TSA, L) abtrennt, und das Gemisch (TSA, L) in eine Rektifikationskolonne (11) führt,
   in der man TSA über Kopf vom Lösungsmittel (L) abtrennt, wobei das Lösungsmittel zurückgeführt wird, oder
   man das Filtrat aus der Filtereinheit (3) in eine Batchrektifikationskolonne führt, aus der man zunächst DSA über Kopf und anschließend TSA über Kopf abtrennt, wobei das Lösungsmittel zurückgeführt wird,
   und man
(e) das Sumpfgemisch (L, NH₄Cl) aus dem Reaktor (1) durch eine Filtereinheit (5) führt, wobei festes Ammoniumchlorid (NH₄Cl) abgetrennt wird, und das Lösungsmittel (L) erhalten wird, das in einem Behälter (9) aufgefangen wird, und man anschließend
(f) 0 bis 99 % dieses Lösungsmittels zurückführt und nicht zurückgeführtes Lösungsmittel durch Lösungsmittel (L) ersetzt.

Das Verfahren hat den Vorteil, dass eine hohe Reaktionsgeschwindigkeit aufgrund der Wahl der Temperatur über Null Grad Celsius, einer intensiven Durchmischung der Edukte in der Lösung mittels Rühren und einer hohen Konzentration an MCS durch Einsatz von flüssigem MCS erzielt wird. Die TSA-Synthese läuft somit mit hoher Bildungsgeschwindigkeit, gleichbedeutend mit einer schnellen Umsetzung von DSA zu TSA ab. Das Verfahren erzielt somit eine hohe Raum-Zeit-Ausbeute.

Ein weiterer Vorteil des erfindungsgemäßen Verfahrens besteht darin, dass das TSA-Lösungsmittel-Gemisch bereits kurze Zeit nach Beendigung des Schrittes b aus dem Reaktor abdestilliert werden kann, weil bei Beendigung von Schritt b die TSA-Bildung praktisch vollständig abgelaufen ist. Vorteilhaft liegt zumindest ein Teil der Menge an abdestilliertem TSA bereits innerhalb eines Intervalls von höchstens 12, vorzugsweise 8 Stunden nach der Beendigung der Zugabe von NH₃ im Schritt b vor. Dadurch wird die Verweilzeit des TSA im Reaktor gering gehalten. Die im Stand der Technik [8] bekannte Zeit nach der Ammoniak-Dosierung muss nicht abgewartet werden bis TSA zur Verfügung steht und dieses anschließend aufgereinigt und isoliert werden kann.

Durch das erfindungsgemäße Verfahren verbessert sich die Ausbeute an TSA. Die Erfinder vermuten, dass die kurze Verweil- und Kontaktzeit des TSA im Reaktor zu diesem vorteilhaften Effekt beiträgt, denn dadurch wird die unerwünschte Disproportionierung bzw. Umsetzung des TSAs mit im Reaktor enthaltenem überschüssigen Ammoniak vermindert.

Des Weiteren besteht ein Vorteil des Verfahrens darin, dass in Schritten d und e das Lösungsmittel (L) erhalten wird, das Rohstoff sparend dem im Schritt a eingesetzten Lösungsmittel L hinzugefügt werden kann, falls das Verfahren mehr als einmal batchweise durchgeführt wird.

Das nach dem Schritt d erhaltene TSA weist eine Reinheit von mindestens 99,5 Gew.-% auf.

Der erfindungsgemäß eingesetzte stöchiometrische Überschuss an NH₃ gegenüber MCS hat den Vorteil, dass MCS im Reaktor vollständig umgesetzt wird. Es wird somit verhindert, dass MCS in die destillative Aufarbeitung gerät und dort mit DSA unter Bildung von Ammoniumchlorid reagiert. Das gebildete Ammoniumchlorid würde zu prozesstechnisch nachteiligen Ablagerungen in der destillativen Aufarbeitung führen.

Das Verfahren erzielt eine hohe bzw. technisch-ökonomisch interessante Ausbeute an TSA bezogen auf MCS. Im Speziellen erhält man bei erfindungsgemäßer Fahrweise eine gegenüber dem Stand der Technik verbesserte Ausbeute an TSA, und eine TSA-Reinheit von über 99,5 Gew.-%. Somit hat das erfindungsgemäße Verfahren ebenfalls den Vorteil, dass das erzeugte TSA für die Verarbeitung in der Halbleiterindustrie tauglich ist.

Das erfindungsgemäße Verfahren wird im Folgenden näher erläutert.

Im Schritt b ist es erforderlich, die Temperatur T zu überwachen. Da die Reaktion exotherm ist, muss die Reaktionsenthalpie auf eine dem Fachmann bekannte Weise abgeführt und die Temperatur gehalten werden.

Vorzugsweise kann im Schritt b des Verfahrens soviel Ammoniak eingesetzt werden, dass der stöchiometrische NH₃ Überschuss von 0,5 bis 20 % entsprechend dem stöchiometrischen molaren Verhältnis MCS:NH₃ von 0,995 bis 0,833 beträgt.

Bevorzugt kann im Schritt b des Verfahrens soviel Ammoniak eingesetzt werden, dass der stöchiometrische NH₃ Überschuss von 0,5 bis 10 % entsprechend dem stöchiometrischen molaren Verhältnis MCS:NH₃ von 0,995 bis 0,909 beträgt.

Besonders bevorzugt kann im Schritt b des Verfahrens soviel Ammoniak eingesetzt werden, dass der stöchiometrische NH₃ Überschuss von 0,5 bis 5 % entsprechend dem stöchiometrischen molaren Verhältnis MCS:NH₃ von 0,995 bis 0,953 beträgt.

Im Schritt c beheizt man den Reaktor auf eine dem Fachmann bekannte Weise, um das Produktgemisch destillativ von der Suspension im Reaktor abzutrennen. Zu Beginn der Destillation entweicht nicht umgesetzter Überschuss an NH₃, anschließend wird DSA abgezogen, anschließend TSA, anschließend Lösungsmittel. Die Destillation wird solange fortgesetzt, bis zuletzt nur noch reines Lösungsmittel abgezogen wird.

Durch die Schritte c und d des Verfahrens wird die Folgereaktion von NH₃ mit TSA unterdrückt, indem nach einem kurzen Zeitraum nach Beendigung der NH₃-Dosierung die Abdestillation des Produktgemisches aus dem Reaktor beginnt. Dabei gelangt der Ammoniak nahezu vollständig über die Vakuumpumpe in das Abgas. Geringste noch vorhandene Restmengen an Ammoniak im aufgefangenen Kondensat, das TSA, DSA und Lösungsmittel enthält, werden in der sich anschließenden Rektifikation zur Abtrennung von DSA über Kopf der entsprechenden Rektifikationskolonne zusammen mit dem DSA entfernt.

Das in Schritt d erhaltene Lösungsmittel kann vollständig zurückgeführt werden. Dies gilt sowohl für Batch- als auch für die kontinuierliche Fahrweise der Rektifikationskolonne.

Es kann vorteilhaft sein, von im Schritt f zurückgewonnenem Lösungsmittel 0 bis 99 % zurückzuführen und nicht zurückgeführtes Lösungsmittel durch frisches Lösungsmittel (L) zu ersetzen.

Vorzugsweise wird ein inertes Lösungsmittel eingesetzt, das kein Azeotrop mit TSA oder DSA bildet. Das inerte Lösungsmittel sollte bevorzugt schwerer flüchtig als TSA sein / bzw. einen um mindestens 10 K höheren Siedepunkt als Trisilylamin aufweisen. Solche bevorzugten Lösungsmittel können ausgewählt sein aus Kohlenwasserstoffen, HalogenKohlenwasserstoffen, Halogenkohlenstoffen, Ethern, Polyethern, tertiäre Aminen.

Ganz besonders bevorzugt wird als Lösungsmittel (L) Toluol eingesetzt. Eine solche Auswahl hat den Vorteil, dass das TSA in Toluol stabil ist. Außerdem ist Ammoniumchlorid in Toluol schwerlöslich, wodurch die Abtrennung von Ammoniumchlorid mittels Filtration erleichtert wird.

Eine hohe Konzentration an Edukten zur Erzielung einer hohen Reaktionsgeschwindigkeit wird erreicht, indem Monochlorsilan in flüssiger Phase, verdünnt durch ein Lösungsmittel (L), eingesetzt wird. Es kann vorteilhaft sein, beim erfindungsgemäßen Verfahren das Lösungsmittel (L), bevorzugt Toluol, in einem volumenmäßigen Überschuss gegenüber MCS einzusetzen. Vorzugsweise wird ein Volumenverhältnis der Flüssigkeiten Lösungsmittel zu MCS von 30:1 bis 1 : 1, bevorzugt von 20 : 1 bis 3 : 1 eingestellt. Besonders bevorzugt kann im Schritt a MCS durch das Lösungsmittel im Volumenverhältnis Lösungsmittel:MCS von 10 : 1 bis 3 : 1 verdünnt werden. Bei Volumenverhältnissen im Bereich von 3 : 1 bis 1 : 1 werden allerdings die Vorteile geringer. Ein volumenmäßiger Überschuss an Lösungsmittel sorgt für eine Verdünnung von MCS. Dies bietet den Vorteil, dass die Konzentration an Ammoniumchlorid, das während der Reaktion entsteht, in der Reaktionslösung verringert und hierdurch wird die Reaktorrührung und -entleerung erleichtert wird. Zusätzlich wird die in [6] und [7] beschriebene katalytische Zersetzung von TSA durch Ammoniumchlorid verringert. Zu große Volumenüberschüsse an L, z. B. oberhalb 30 : 1, verschlechtern allerdings die Raum-Zeit-Ausbeute im Reaktor.

Der Einfluss der Temperatur, bei einer Erhöhung um 10 K im Allgemeinen zu einer Erhöhung der Reaktionsgeschwindigkeit um das Doppelte zu führen, ist zwar bekannt. Doch in [8] wird die Reaktion zu Herstellung von TSA bei einer Temperatur von -100 bis 0 °C durchgeführt. Denn bei höheren Temperaturen wird eine verringerte Ausbeute an TSA zugunsten der Bildung von Polysilazanen befürchtet. Es wird angenommen, dass bei solchen Temperaturen die in den Reaktionsgleichungen (2) - (5) in der Mitte gezeigten Addukte thermisch instabil sind und diese leicht unter unerwünschter Bildung von Polysilazanen zerfallen, so dass die Ausbeute an TSA sinkt.

Beim vorliegenden Verfahren wurde dagegen überraschend gefunden, dass bei Temperaturen von 10 °C oder höher Polysilazane nur in verschwindend geringen Mengen gebildet werden.

Vorzugsweise kann somit im Schritt a des Verfahrens eine Temperatur von 10 °C bis 30 °C eingestellt und im Schritt b gehalten werden, besonders bevorzugt von 10 °C bis 20 °C, und ganz besonders bevorzugt wird eine Temperatur von 10 °C eingestellt.

Zur intensiven Durchmischung des Reaktors kann ein Rührer eingesetzt werden, um zwei Vorteile gleichzeitig zu verwirklichen. Zum einen kann in den Reaktor eindosiertes Ammoniak direkt dispergiert werden, um lokal hohe Konzentrationen an Ammoniak zu vermeiden, somit den eingebrachten Ammoniak fein zu verteilen, und damit Nebenreaktionen unter Bildung von Polysilazanen zu unterdrücken. Zum anderen kann durch Rühren das im Reaktor entstehende Ammoniumchlorid suspendiert und zur Vermeidung von Ablagerungen in der Schwebe gehalten werden. Die Auswahl des Rührers ist dem Fachmann bekannt.

Durch eine Temperatur im Reaktor von 10 °C oder höher, bevorzugt von 10 °C bis 30 °C, besonders bevorzugt von 10 °C bis 20 °C, ganz besonders bevorzugt von 10 °C, ein Volumenverhältnis der Flüssigkeiten Lösungsmittel zu Monochlorsilan von 30 : 1 bis 1 : 1, bevorzugt von 20 : 1 bis 3 : 1, besonders bevorzugt von 10 : 1 bis 3 : 1, sowie einem mit einem Rührer ausgestatteten Rührwerksautoklav, der das eindosierte Ammoniak direkt dispergiert, das entstehende Ammoniumchlorid suspendiert und in der Schwebe hält, wird ein Verfahren bereit gestellt, in dem die TSA-Synthese quasi in-situ mit der Ammoniakdosierung abläuft. Entsprechend kann die Ammoniakdosierung in einem weiten Bereich variiert und zur Erzielung für den technischen Betrieb interessanten Raum-Ausbeute erhöht werden. Gleichzeitig verringert sich durch die quasi in-situ-Bildung von TSA die erforderliche Nachreaktionszeit, gleichbedeutend damit, dass sich im Anschluss an die Dosierung von Ammoniak die Notwendigkeit eines Zeitraums des Nachrührens von maximal 1 h ergibt. Das Nachrühren erfolgt bei der Temperatur der Schritte a und b. Im Stand der Technik, im Speziellen bei Korolev [8], ist ein deutlich längeres Nachrühren von bis zu 48 h erforderlich.
Im erfindungsgemäßen Verfahren wird dagegen maximal 1 h im Anschluss an die Beendigung der NH₃-Zudosierung der Reaktor im Schritt c entspannt, der Destillationsdruck von 0,5 bara bis 0,8 bara eingestellt, der Rührwerksautoklav zur nachfolgenden Destillation beheizt und im Anschluss TSA zusammen mit im Wesentlichen Anteilen an Toluol aus dem Reaktor abdestilliert. Die abdestillierte Lösung wird anschließend zur Gewinnung von Rein-TSA einer Rektifikation zugeführt.
Die Beheizung wird durchgeführt, um TSA zusammen mit DSA, NH₃, mit Anteilen an L sowie mit geringen Mengen an NH₄Cl aus dem Reaktor zu destillieren. Dazu wird das Produktgemisch (TSA, L, NH₄Cl, DSA, NH₃) aus Reaktor (1) gasförmig über Kopf durch eine Destilliereinheit (2) geleitet, das NH₃ mittels einer Vakuumeinheit (8) abtrennt, das Produktgemisch (TSA, L, NH₄Cl, DSA) in einem Wärmetauscher (7) kondensiert und das Produktgemisch (TSA, L, NH₄Cl, DSA) in einem Behälter (6) aufgefangen.
Bei der Destillation entweicht zunächst NH₃ durch den Wärmetauscher (7) und die Vakuumeinheit (8) in das Abgas. Anschließend stellt sich im Wärmetauscher (7) für kurze Zeit die Kondensationstemperatur von DSA beim eingestellten Druck ein, beispielsweise bei 0,5 bar a etwa 12 °C. Anschließend stellt sich im Wärmetauscher (7) die Kondensationstemperatur von TSA beim eingestellten Druck ein, beispielsweise bei 0,5 bara etwa 27 °C. Die Kondensationstemperatur bleibt konstant, solange reines TSA destilliert wird. Die Kondensationstemperatur im Wärmetauscher (7) beginnt zu steigen, sobald Toluol mit destilliert wird. Der Anteil an Toluol im Dampf steigt immer weiter an, bis reines Toluol destilliert wird. Zu diesem Zeitpunkt stellt sich im Wärmetauscher (7) die Kondensationstemperatur des reinen Toluols beim eingestellten Druck ein, beispielsweise bei 0,5 bara etwa 85 °C. Nachdem eine ausreichende Menge reines Toluol destilliert worden ist, gleichbedeutend damit, dass sichergestellt wird, dass das im Reaktor verbleibende Sumpfgemisch weitestgehend frei von TSA und DSA ist, wird die Destillation durch Stoppen der Beheizung des Reaktors beendet. Dem Fachmann ist bekannt, dass die Zeitdauer für das Entspannen und das Beheizen des Reaktors mit dem Volumen des Reaktors steigt, um die Destillation zu starten und den ersten Tropfen an TSA-Destillat zu erhalten. Es kann vorteilhaft sein, die Umsetzung in einem Reaktor mit kleinem Volumen, vorzugsweise von 1 bis 10 l, besonders bevorzugt einem Volumen von 5 l durchzuführen. Vorzugsweise kann bereits 2 Stunden nach Beendigung der Einleitung von NH₃ oder vorzugsweise bereits 1 Stunde nach Beendigung des weiteren Rührens bei der in den Schritten a und b eingestellten Temperatur der erste Tropfen an TSA-Destillat aufgefangen werden.
Die zeitliche Dauer zwischen der Beendigung der Einleitung von NH₃ und der Kondensation des ersten Tropfens an TSA-Destillat bzw. zwischen der Beendigung des weiteren Rührens bei der in Schritt a und b eingestellten Temperatur und der Kondensation des ersten Tropfens an TSA-Destillat hängt von der erforderlichen Dauer für die Entspannung des Reaktors und das Beheizen des Reaktors ab. Das erfindungsgemäße Verfahren ermöglicht es, die Destillation direkt im Anschluss an ein einstündiges weiteres Rühren bei der in Schritt a und b eingestellten Temperatur zu starten.
Insgesamt gewährleistet das beschriebene Verfahren eine insbesondere unter technisch/ökonomischen Gesichtspunkten hohe Raum-Zeit-Ausbeute zur Bereitstellung von TSA. Offenbart hierin ist ebenfalls eine Anlage für die Umsetzung zumindest der Edukte Monochlorsilan (MCS) in einem Lösungsmittel (L) und Ammoniak in der Flüssigphase zur Herstellung von Trisilylamin (TSA), umfassend
- einen Reaktor (1) mit den Zuführungen für die Komponenten Ammoniak, zumindest MCS sowie (L), und
   einem Auslass für Produktgemisch (TSA, L, NH₄Cl, DSA, NH₃), der in eine dem Reaktor (1)
- nachgeschaltete Destilliereinheit (2), einen Wärmeaustauscher (7) mit angeschlossener Vakuumpumpe (8) und einen Behälter (6) mündet, der mit einer Leitung zu
- einer Filtereinheit (3) ausgestattet ist, die zumindest einen Feststoffauslass für NH₄Cl und eine weitere Leitung zur Überführung des Filtrates aufweist, die in
- eine Rektifikationskolonne (4) mündet, die mit einem Auslass über Kopf für DSA und einer Ausschleusung für das Gemisch (TSA, L) vom Sumpf ausgestattet ist, die in
- eine Rektifikationskolonne (11) mündet, die mit einem Auslass über Kopf für TSA und einer Ausschleusung für das Lösungsmittel (L) vom Sumpf ausgestattet ist, oder die in
- eine Batchrektifikationskolonne mündet, in die man das Filtrat aus der Filtereinheit (3) führt,
   und einer Ausschleusung im Reaktorsumpf für das Sumpfgemisch (L, NH₄Cl), die in
      - eine nachgeschaltete Filtereinheit (5) mündet, die zumindest einen Feststoffauslass für NH₄Cl und eine weitere Leitung zur Überführung des Filtrates enthaltend das Lösungsmittel aufweist, die in
      - einen Behälter (9) mündet.

Aus den kontinuierlich hintereinander betriebenen Rektifikationskolonnen oder aus der Batchrektifikationskolonne führt man zunächst DSA über Kopf und anschließend TSA über Kopf ab. In beiden Fällen kann das Lösungsmittel zurückgeführt werden.

Aus Behälter (9) kann 0 bis 99 % des Lösungsmittels zurückgeführt werden. Nicht zurückgeführtes Lösungsmittel muss durch Lösungsmittel (L) ersetzt werden. Für die Durchführung dieser Optionen erforderliche Anlagenteile sind dem Fachmann bekannt.

Das Verfahren wird im Folgenden anhand von Beispielen erläutert.

### Vergleichsbeispiel 1

In einen zuvor mit Inertgas gespülten 5l-Rührwerksautoklav mit Kühl- und Heizmodus und aufgesetzter Destilliereinheit, umfassend Destillationskolonne und Kondensator, wurden 3400 ml Toluol und anschließend 469 g Monochlorsilan eingefüllt. Innerhalb eines Zeitraums von 7 Stunden 10 Minuten erfolgte die Dosierung von 178 g Ammoniak in die Reaktionslösung. Die Temperatur betrug während der Dosierung konstant 0 °C. Der Druck betrug während der Dosierung konstant 3 bara. Nach der Dosierung des Ammoniaks wurde 1 Stunde weiterhin bei 0 °C nachgerührt. Anschließend wurde die Reaktorlösung unter fortgesetztem, weiterem Rühren über Nacht bei - 20 °C temperiert.

Am Folgetag wurde ein Druck von 0,5 bara über eine hinter der Destilliereinheit angeschlossene Vakuumpumpe eingestellt und der Rührwerksautoklav beheizt. Mittels der Destilliereinheit erfolgte die Abdestillation von TSA, DSA, Anteilen an Toluol und Spuren an Ammoniumchlorid. Überschüssiger Ammoniak aus der Synthese gelangte über die Vakuumpumpe in das Abgas der Destillation. Der Kryostat des Destillat-Kondensators wurde bei -20 °C Vorlauftemperatur betrieben. Der erste Tropfen an TSA-Destillat wurde 17 Stunden 40 Minuten nach Beendigung der oben beschriebenen Dosierung von Ammoniak in die Reaktionslösung aufgefangen. Die Destillation wurde 1 Stunde 30 Minuten nach Auffangen des ersten Tropfens an TSA-Destillat beendet.

Die aufgefangene Destillatlösung wurde filtriert, war danach frei von Ammoniumchlorid und somit klar. Anschließend wurde zunächst DSA (7 g) durch Rektifikation abgetrennt. Anschließend erfolgte die Abtrennung des TSAs (172 g) vom Toluol (384 g) durch Rektifikation. Nach Abschluss der Rektifiziervorgänge enthielt die eingesetzte Rektifikationskolonne weder Feststoffe noch Ablagerungen. Die Kühlfalle hinter der Rektifikationskolonne enthielt nach Abschluss der Destillation 1,5 g Substanz, die nach qualitativer Analyse Si und N enthielt.

Die Ausbeute des destillativ abgetrennten TSAs bezogen auf das eingesetzte Monochlorsilan betrug 68 %. TSA wurde mit einer Reinheit von über 99,5 Gew.-% erhalten.

Die im Rührwerksautoklav noch befindliche Lösung von Toluol, Ammoniumchlorid und geringen Mengen an TSA, DSA und Polysilazanen wurde abgelassen und filtriert. Das filtrierte Toluol enthielt 6 g TSA, 0,5 g DSA, 3 g Polysilazane und war frei von Ammoniumchlorid. Der getrocknete Filterkuchen aus Ammoniumchlorid enthielt 3 g Silizium.

### Vergleichsbeispiel 2

In einen zuvor mit Inertgas gespülten 5l-Rührwerksautoklav mit Kühl- und Heizmodus und aufgesetzter Destilliereinheit, umfassend Destillationskolonne und Kondensator, wurden 3400 ml Toluol und anschließend 470 g Monochlorsilan eingefüllt. Innerhalb eines Zeitraums von 7 Stunden 10 Minuten erfolgte die Dosierung von 179 g Ammoniak in die Reaktionslösung. Die Temperatur betrug während der Dosierung konstant 0 °C. Der Druck stieg während der Dosierung von 2,6 bara auf 2,8 bara. Nach der Dosierung des NH₃ wurde 1 Stunde weiterhin bei 0 °C nachgerührt.

Anschließend wurde ein Druck von 0,5 bara über eine hinter der Destilliereinheit angeschlossene Vakuumpumpe eingestellt und der Rührwerksautoklav beheizt. Mittels der Destilliereinheit erfolgte die Abdestillation von TSA, DSA, Anteilen an Toluol und Spuren an Ammoniumchlorid; überschüssiger Ammoniak aus der Synthese gelangte über die Vakuumpumpe in das Abgas der Destillation. Der Kryostat des Destillat-Kondensators wurde bei -20 °C Vorlauftemperatur betrieben. Der erste Tropfen an TSA-Destillat wurde 2 Stunden nach Beendigung der oben beschriebenen Dosierung von Ammoniak in die Reaktionslösung aufgefangen. Die Destillation wurde 2 Stunden 10 Minuten nach Auffangen des ersten Tropfens an TSA-Destillat beendet.

Die aufgefangene Destillatlösung wurde filtriert, war danach frei von Ammoniumchlorid und somit klar. Anschließend wurde zunächst DSA (4 g) durch Rektifikation abgetrennt. Anschließend erfolgte die Abtrennung des TSAs (173 g) vom Toluol (319 g) durch Rektifikation. Nach Abschluss der Rektifiziervorgänge enthielt die eingesetzte Rektifikationskolonne keinerlei Feststoffe bzw. Ablagerungen. Die Kühlfalle hinter der Rektifikationskolonne enthielt nach Abschluss der Destillation 5 g Substanz, die nach qualitativer Analyse Si und N enthielt.

Die Ausbeute des destillativ abgetrennten TSAs bezogen auf das eingesetzte Monochlorsilan betrug 68 %. TSA wurde mit einer Reinheit von über 99,5 Gew.-% erhalten.

Die im Rührwerksautoklav noch befindliche Lösung von Toluol, Ammoniumchlorid und geringen Mengen an TSA, DSA und Polysilazanen wurde abgelassen und filtriert. Das filtrierte Toluol enthielt 9 g TSA, 0,8 g DSA, 3 g Polysilazane und war frei von Ammoniumchlorid. Der getrocknete Filterkuchen aus Ammoniumchlorid enthielt 3 g Silizium.

### Beispiel 1

In einen zuvor mit Inertgas gespülten 5l-Rührwerksautoklav mit Kühl- und Heizmodus und aufgesetzter Destilliereinheit, umfassend Destillationskolonne und Kondensator, wurden 3400 ml Toluol und anschließend 466 g Monochlorsilan eingefüllt. Innerhalb eines Zeitraums von 7 Stunden 5 Minuten erfolgte die Dosierung von 177 g Ammoniak in die Reaktionslösung. Die Temperatur betrug während der Dosierung konstant +10 °C. Der Druck stieg während der Dosierung von 2,8 bara auf 3,1 bara. Nach der Ammoniak-Dosierung wurde 1 Stunde weiterhin bei +10 °C nachgerührt. Anschließend wurde die Reaktorlösung unter fortgesetztem, weiterem Rühren über Nacht bei - 20 °C temperiert.

Am Folgetag wurde ein Druck von 0,5 bara über eine hinter der Destilliereinheit angeschlossene Vakuumpumpe eingestellt und der Rührwerksautoklav beheizt. Mittels der Destilliereinheit erfolgte die Abdestillation von TSA, DSA, Anteilen an Toluol und Spuren an Ammoniumchlorid. Überschüssiger Ammoniak aus der Synthese gelangte über die Vakuumpumpe in das Abgas der Destillation. Der Kryostat des Destillat-Kondensators wurde bei -20 °C Vorlauftemperatur betrieben. Der erste Tropfen an TSA-Destillat wurde 19 Stunden 25 Minuten nach Beendigung der oben beschriebenen Dosierung von Ammoniak in die Reaktionslösung aufgefangen. Die Destillation wurde 3 Stunden 50 Minuten nach Auffangen des ersten Tropfens an TSA-Destillat beendet. Die Prozessinnentemperatur im Destillat-Kondensator stieg während der Destillation von -3 auf +3 °C an.

Bei der Prozessinnentemperatur im Destillat-Kondensator von -3 ansteigend auf +3 °C wurden TSA und das in geringen Mengen gebildete DSA nicht quantitativ auskondensiert.

Um das TSA und DSA, das nicht auskondensiert worden ist, vollständig aufzufangen, waren hinter der Vakuumpumpe zwei Waschflaschen insgesamt gefüllt mit 3370 g 20 Gew.-%iger Natronlauge installiert. TSA und DSA, die in die Waschflaschen gelangten, wurden hydrolysiert. Die quantitative Analyse des Inhalts der Waschflaschen ergab 15,2 g Silizium. Durch die Hydrolyse konnte das Massenverhältnis zwischen TSA und DSA nicht bestimmt werden. Falls die 15,2 g Silizium vollständig aus TSA gestammt hätten, ergäbe sich eine in den Waschflaschen aufgefangene Menge an TSA von 19,4 g.

Die aufgefangene Destillatlösung wurde filtriert, war danach frei von Ammoniumchlorid und somit klar. Die Lösung wurde mittels Gaschromatografie quantitativ analysiert und enthielt danach DSA (12,8 g), TSA (165,7 g) und Toluol (145,3 g). Die Lösung wurde weiterhin mittels ¹H-NMR quantitativ analysiert und enthielt danach DSA (14,9 g), TSA (165,5 g) und Toluol (143,4 g).

Die Ausbeute des in der Destillatlösung enthaltenen TSAs bezogen auf das eingesetzte Monochlorsilan betrug 66 %.

Die im Rührwerksautoklav noch befindliche Lösung von Toluol, Ammoniumchlorid und geringen Mengen an TSA, DSA und Polysilazanen wurde abgelassen und filtriert. Das filtrierte Toluol enthielt 4 g TSA, 0,3 g DSA, 4 g Polysilazane und war frei von Ammoniumchlorid. Der getrocknete Filterkuchen aus Ammoniumchlorid enthielt 3 g Silizium.

### Hinweiszeichen Literaturzitate

[1] A. Stock, K. Somieski, Berichte der Deutschen Chemischen Gesellschaft 54 1921 pp. 740 - 758
[2] U. Wannagat, Fortschritte der Chemischen Forschung 9 (1) 1967 pp. 102 - 144
[3] A. MacDiarmid, Advances in inorganic chemistry and radiochemistry 3 1961 pp. 207-256,
[4] B.J. Aylett, M.J. Hakim, Inorganic Chemistry 5 (1) 1966 p. 167
[5] R.L. Wells, R. Schaeffer, Journal of the American Chemical Society 88 (1) 1966 pp. 37 - 42
[6] G.D. Miller, WO 2010/141551 A1
[7] C.J. Ritter, III, US 2013/0216463 A1
[8] A.V. Korolev, US 2013/0209343 A1
[9] C.-F. Hoppe, H. Rauleder, Ch. Götz, DE102011088814.4
[10] C.-F. Hoppe, H. Rauleder, Ch. Götz, G. Uehlenbruck, DE 102012214290.8
[11] C.-F. Hoppe, Ch. Götz, G. Uehlenbruck, H. Rauleder, DE 102013209802.2
[12] N.Y. Kovarsky, D. Lubomirsky, US 2011/0136347 A1

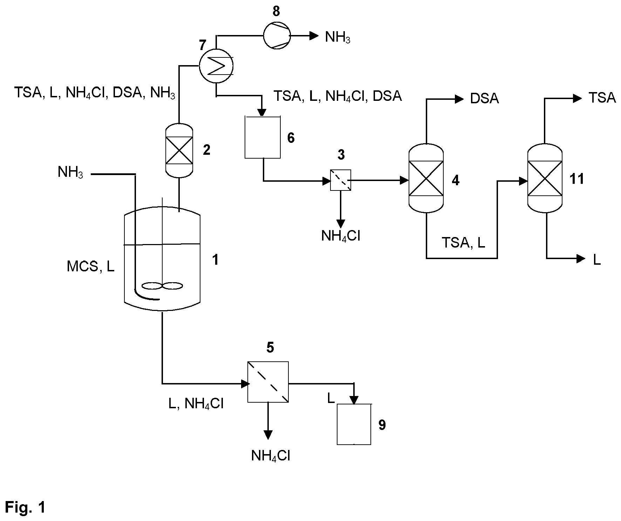

## Patentansprüche

1. Verfahren zur Herstellung von Trisilylamin (TSA) in der Flüssigphase, indem man
(a) zumindest Monochlorsilan (MCS) in einem Lösungsmittel (L) gelöst in einem Reaktor (1) flüssig vorlegt, wobei
das Lösungsmittel gegenüber MCS, Ammoniak (NH₃) und TSA inert ist und einen höheren Siedepunkt als TSA aufweist, die Lösung rührt, und man die Temperatur T der Lösung auf 10 °C oder höher einstellt, und
(b) die Reaktion in Reaktor (1) durchführt, indem man
NH₃ in den Reaktor (1) in stöchiometrischem Überschuss gegenüber MCS einleitet, wobei
die Temperatur T gehalten wird, und anschließend
(c) den Reaktor entspannt, einen Druck von 0,5 bara bis 0,8 bara einstellt, den Reaktor beheizt, das Produktgemisch (TSA, L, NH₄Cl, DSA, NH₃) aus Reaktor (1) gasförmig über Kopf durch eine Destilliereinheit (2) leitet, das NH₃ mittels einer Vakuumeinheit (8) abtrennt, das Produktgemisch (TSA, L, NH₄Cl, DSA) in einem Wärmetauscher (7) kondensiert und das Produktgemisch (TSA, L, NH₄Cl, DSA) in einem Behälter (6) auffängt, anschließend
(d) mittels Filtereinheit (3) filtriert, wobei festes Ammoniumchlorid (NH₄Cl) aus dem Produktgemisch abgetrennt wird,
und man das Filtrat aus der Filtereinheit (3) in die Rektifikationskolonne (4) führt, in der man DSA über Kopf vom Gemisch (TSA, L) abtrennt, und
das Gemisch (TSA, L) in eine Rektifikationskolonne (11) führt, in der man TSA über Kopf vom Lösungsmittel (L) abtrennt, wobei das Lösungsmittel zurückgeführt wird, oder
man das Filtrat aus der Filtereinheit (3) in eine Batchrektifikationskolonne führt, aus der man zunächst DSA über Kopf und anschließend TSA über Kopf abtrennt, wobei das Lösungsmittel zurückgeführt wird,
und man
(e) das Sumpfgemisch (L, NH₄Cl) aus dem Reaktor (1) durch eine Filtereinheit (5) führt, wobei festes Ammoniumchlorid (NH₄Cl) abgetrennt wird, und das Lösungsmittel (L) erhalten wird, das in einem Behälter (9) aufgefangen wird, und man anschließend
(f) 0 bis 99 % dieses Lösungsmittels zurückführt und nicht zurückgeführtes Lösungsmittel durch Lösungsmittel (L) ersetzt.

2. Verfahren nach Anspruch 1, wobei die Temperatur T im Schritt a auf einen Wert von 10 °C bis 30 °C eingestellt und zumindest im Schritt b auf diesem Wert gehalten wird.

3. Verfahren nach einem der vorhergehenden Ansprüche, wobei im Schritt a MCS durch das Lösungsmittel im Volumenverhältnis Lösungsmittel: MCS von 10 : 1 bis 3 : 1 verdünnt wird

4. Verfahren nach einem der vorangehenden Ansprüche, wobei das Lösungsmittel (L) Toluol ist.

5. Verfahren nach einem der vorangehenden Ansprüche, wobei der stöchiometrische Überschuss von NH₃ gegenüber MCS von 0,5 bis 5 % eingestellt wird.

6. Verfahren nach einem der vorhergehenden Ansprüche, wobei im Schritt b durch das Rühren Ammoniumchlorid NH₄Cl in Schwebe gehalten und gleichzeitig in den Reaktor (1) eingebrachtes Ammoniak (NH₃) fein verteilt wird.

7. Verfahren nach einem der vorhergehenden Ansprüche, wobei im Schritt f von 80 bis 99 % des zurückgewonnenen Lösungsmittels zurückgeführt wird und nicht zurückgeführtes Lösungsmittel durch Lösungsmittel (L) ersetzt wird.

## Claims

1. Process for producing trisilylamine (TSA) in the liquid phase, in that
(a) at least monochlorosilane (MCS) dissolved in a solvent (L) is charged in a reactor (1) in the liquid state, wherein
the solvent is inert with respect to MCS, ammonia (NH₃) and TSA, and has a higher boiling point than TSA, the solution is stirred, and the temperature T of the solution is set to 10°C or above, and
(b) the reaction is carried out in reactor (1), wherein
NH₃ is introduced into the reactor (1) in a stoichiometric excess relative to MCS, wherein
the temperature T is maintained, and then
(c) the reactor is depressurized, a pressure of from 0.5 bara to 0.8 bara is set, the reactor is heated, the product mixture (TSA, L, NH₄Cl, DSA, NH₃) is conducted in gaseous form overhead from the reactor (1) through a distillation unit (2), the NH₃ is separated off by means of a vacuum unit (8), the product mixture (TSA, L, NH₄Cl, DSA) is condensed in a heat exchanger (7) and the product mixture (TSA, L, NH₄Cl, DSA) is collected in a vessel (6), then
(d) the product mixture is filtered by means of filter unit (3), with solid ammonium chloride (NH₄Cl) being separated off from the product mixture,
and the filtrate is conducted from the filter unit (3) into the rectification column (4)
in which DSA is separated off overhead from the mixture (TSA, L), and the mixture (TSA, L) is conducted into a rectification column (11),
in which TSA is separated off overhead from the solvent (L), with the solvent being recirculated, or
the filtrate is conducted from the filter unit (3) into a batch rectification column (4) from which DSA is first separated off overhead and then TSA is separated off overhead, with the solvent being recirculated,
and
(e) the bottom product mixture (L, NH₄Cl) is conducted from the reactor (1) through a filter unit (5) in which solid ammonium chloride (NH₄Cl) is separated off,
and the solvent (L) is obtained, which is collected in a vessel (9)
and then
(f) 0 to 99% of this solvent is recirculated and non-recirculated solvent is replaced by solvent (L).

2. Process according to Claim 1, wherein the temperature T is set in step a to a value of 10°C to 30°C, and is maintained at this value at least in step b.

3. Process according to either of the preceding claims, wherein, in step a, MCS is diluted by the solvent in the volume ratio solvent : MCS of 10 : 1 to 3 : 1

4. Process according to any one of the preceding claims, wherein the solvent (L) is toluene.

5. Process according to any one of the preceding claims, wherein the stoichiometric excess of NH₃ relative to MCS of 0.5 to 5 % is set.

6. Process according to any one of the preceding claims, wherein, in step b, by means of the stirring, ammonium chloride NH₄Cl is kept in suspension and simultaneously ammonia (NH₃) introduced into the reactor (1) is finely distributed.

7. Process according to any one of the preceding claims, wherein, in step f, from 80 to 99% of the recovered solvent is recirculated, and non-recirculated solvent is replaced by solvent (L).

## Revendications

1. Procédé de fabrication de trisilylamine (TSA) dans la phase liquide, selon lequel
(a) au moins du monochlorosilane (MCS) dissous dans un solvant (L) est chargé sous forme liquide dans un réacteur (1),
le solvant étant inerte vis-à-vis du MCS, de l'ammoniac (NH₃) et de la TSA, et présentant un point d'ébullition plus élevé que la TSA, la solution étant agitée et la température T de la solution étant ajustée à 10 °C ou plus, et
(b) la réaction est réalisée dans le réacteur (1) par introduction de NH₃ dans le réacteur (1) en excès stoechiométrique par rapport au MCS,
la température T étant maintenue, puis
(c) le réacteur est détendu, une pression de 0,5 bara à 0,8 bara étant ajustée, le réacteur est chauffé, le mélange de produits (TSA, L, NH₄Cl, DSA, NH₃) est déchargé du réacteur (1) sous forme gazeuse par la tête par une unité de distillation (2), le NH₃ est séparé par une unité sous vide (8), le mélange de produits (TSA, L, NH₄Cl, DSA) est condensé dans un échangeur de chaleur (7) et le mélange de produits (TSA, L, NH₄Cl, DSA) est collecté dans un contenant (6), puis
(d) filtré au moyen d'une unité de filtration (3), du chlorure d'ammonium solide (NH₄Cl) étant séparé du mélange de produits,
et le filtrat de l'unité de filtration (3) est introduit dans la colonne de rectification (4), dans laquelle la DSA est séparée par la tête du mélange (TSA, L), et le mélange (TSA, L) est introduit dans une colonne de rectification (11), dans laquelle la TSA est séparée par la tête du solvant (L), le solvant étant recyclé, ou
le filtrat de l'unité de filtration (3) est introduit dans une colonne de rectification discontinue, à partir de laquelle de la DSA est tout d'abord séparée par la tête, puis de la TSA par la tête, le solvant étant recyclé,
et
(e) le mélange de fond (L, NH₄Cl) du réacteur (1) est introduit dans une unité de filtration (5), du chlorure d'ammonium solide (NH₄Cl) étant séparé, et le solvant (L) étant obtenu, qui est collecté dans un contenant (9), puis
(f) 0 à 99 % de ce solvant est recyclé et le solvant non recyclé est remplacé par du solvant (L).

2. Procédé selon la revendication 1, dans lequel la température T à l'étape a est ajustée à une valeur de 10 °C à 30 °C et maintenue à cette valeur au moins à l'étape b.

3. Procédé selon l'une quelconque des revendications précédentes, dans lequel, à l'étape a, le MCS est dilué par le solvant en un rapport en volume solvant:MCS de 10:1 à 3:1.

4. Procédé selon l'une quelconque des revendications précédentes, dans lequel le solvant (L) est le toluène.

5. Procédé selon l'une quelconque des revendications précédentes, dans lequel l'excès stoechiométrique de NH₃ par rapport au MCS est ajusté à 0,5 à 5 %.

6. Procédé selon l'une quelconque des revendications précédentes, dans lequel, à l'étape b, le chlorure d'ammonium NH₄Cl est maintenu en suspension par l'agitation et l'ammoniac (NH₃) introduit dans le réacteur (1) est simultanément réparti finement.

7. Procédé selon l'une quelconque des revendications précédentes, dans lequel, à l'étape f, 80 à 99 % du solvant récupéré est recyclé et le solvant non recyclé est remplacé par du solvant (L).
